# EUROPÄISCHE PATENTSCHRIFT

(11) **EP 2 311 364 B1**
(45) Veröffentlichungstag und Bekanntmachung des Hinweises auf die Patenterteilung: **27.12.2017**
(21) Anmeldenummer: 10187131.7
(22) Anmeldetag: 11.10.2010
(51) Int. Cl.: A47L 15/42, A47L 15/44, A47L 15/46, A47L 15/00, D06F 33/02, G01F 23/00, D06F 39/00, D06F 39/02

(54) **GESCHIRRSPÜLMASCHINE**
DISHWASHER
LAVE-VAISSELLE

(30) Priorität: 14.10.2009 DE 102009045660
(43) Veröffentlichungstag der Anmeldung: 20.04.2011
(73) Patentinhaber: BSH Hausgeräte GmbH, 81739 München (DE)
(72) Erfinder: Groll, Hubert, 89426 Mödingen (DE)

(56) Entgegenhaltungen:
- DE-A1- 3 513 640
- DE-U1- 8 707 391
- FR-A1- 2 128 501
- US-A- 2 859 760
- US-A- 3 856 058
- US-A- 4 164 197

## Beschreibung

Die vorliegende Erfindung betrifft ein Wasserführendes Haushaltsgerät, insbesondere eine Geschirrspülmaschine oder Waschmaschine, mit mindestens einem Vorratsbehälter zum Bevorraten eines Zugabemittels für mehrere Spülgänge, wie beispielsweise Reinigungsmittel, Klarspüler oder Regeneriersalz, dient.

Aus der Praxis sind z.B. Geschirrspülmaschinen bekannt, welche einen oder mehrere Vorratsbehälter zum Bevorraten jeweils eines Verbrauchsstoffes für mehrere Spülgänge umfassen. Der Vorteil derartiger Vorratsbehälter liegt darin, dass die Vorbereitung eines Spülganges zum Spülen von Geschirr für den Bediener vereinfacht ist. So muss er nicht vor jedem einzelnen Spülgang eine Vielzahl von Verbrauchsstoffen zuführen. Dabei hat es sich weitgehend durchgesetzt, Geschirrspülmaschinen mit einem Vorratsbehälter für Klarspüler und mit einem weiteren Vorratsbehälter für Regeneriersalz auszustatten. Wenngleich weniger verbreitet, sind auch Geschirrspülmaschinen bekannt, welche einen separaten Vorratsbehälter für das eigentliche Reinigungsmittel aufweisen.

Derartigen Vorratsbehältern kann ggf. eine Überwachungseinrichtung für den Füllstand des darin bevorrateten Verbrauchsstoffes zugeordnet sein. Solche Überwachungseinrichtungen sind insbesondere dafür vorgesehen, dem Bediener einen niedrigen Füllstand anzuzeigen und ihn so aufzufordern, den jeweiligen Verbrauchsstoff nachzufüllen. Bekannt sind dabei optische und mechanische Füllstandsanzeigen, welche unmittelbar an dem jeweiligen Vorratsbehälter angeordnet sind. Da die Vorratsbehälter jedoch üblicherweise im Spülbehälter der Geschirrspülmaschine angeordnet und daher selbst bei geöffneter Tür nur schwer einsehbar sind, wird ein Mangel bzw. ein Fehlen an Verbrauchsstoff durch den Bediener häufig übersehen, so dass das an sich erforderliche Nachfüllen unterbleibt.

Hierdurch wird in einem nachfolgend durchgeführten Spülgang in aller Regel ein mangelhaftes Spülergebnis erreicht. So führt ein zu geringer Füllstand des Reinigungsmittelbehälters in aller Regel zu einer ungenügenden Reinigungswirkung. Am Geschirr verbleibende Verschmutzungen sind die Folge. Ein zu geringer Füllstand des Klarspülers bewirkt in vielen Fällen ein Auftreten von Flecken an dem Geschirr. Schließlich führt ein Mangel an Regeneriersalz zu einer ungenügenden Leistung der üblicherweise vorgesehenen Entkalkungseinrichtung, was ebenfalls Flecken am Geschirr erzeugen kann. Darüber hinaus kann ein Mangel an Regeneriersalz aber auch zu Schäden an der Geschirrspülmaschine durch Verkalken führen.

Aufgrund dieser erheblichen Konsequenzen sind elektrische Überwachungseinrichtungen für Vorratsbehälter von Geschirrspülmaschinen entwickelt worden. Diese weisen einen Sensor zur Überwachung eines Mindestfüllstands eines Vorratsbehälters und eine außen am Geschirrspüler angeordnete Anzeige auf, so dass der Mangel eines Verbrauchsstoffes auch bei geschlossener Tür der Geschirrspülmaschine erkennbar ist. Die Anzeige ist dabei üblicherweise an einer Bedienblende im oberen Bereich der Türe angeordnet und besteht üblicherweise aus einer Lampe oder Leuchtdiode, deren Aufleuchten dem Bediener signalisiert, dass der Füllstand des betroffenen Verbrauchsstoffes gering ist. Hierdurch wird der Bediener aufgefordert, den Vorratsbehälter aufzufüllen.

Wenngleich eine derartige Anzeige seltener übersehen wird, hat sich in der Praxis doch gezeigt, dass bei vielen Bedienern beim Aufleuchten der Vorratsstoffmangelanzeige ein gewisser Gewöhnungseffekt eintritt, der zum Ignorieren der Aufforderung zum Nachfüllen des Vorratsbehälters führt. So wird das Nachfüllen des Vorratsbehälters im Glauben, der aktuelle Füllstand werde für den nächsten Spülgang noch reichen, immer wieder verschoben, bis der Verbrauchsstoff tatsächlich zur Neige geht. Gleichwohl startet der Bediener die Geschirrspülmaschine immer wieder, so dass die bereits beschriebenen Folgen eintreten können.

Umgekehrt kann mit dem Befüllen eines derartigen Vorratsbehälters ggf. ein Überfüllen oder ein Danebenfüllen von Zugabemittel einhergehen. Dieses überschüssige Zugabemittel kann zu Beeinträchtigungen des jeweiligen Spülgangs eines gewählten Betriebsprogramms führen.

Entsprechendes gilt natürlich auch für die Waschgänge einer Haushaltswaschmaschine.

Die DE 35 13 640 A1 zeigt eine Geschirrspülmaschine, welche eine Dosiereinrichtung für ein flüssiges Spül- oder Zusatzmittel aufweist, wobei ein Sensor ein maximales Füllniveau bei geöffneter, horizontal angeordneter Tür überwacht und bei geschlossener, vertikal angeordneter Tür ein Nachfüllniveau überwacht. Eine erste Füllstandsanzeige überwacht das maximale Füllniveau und eine zweite Füllstandsanzeige überwacht das Nachfüllniveau.

Aufgabe der vorliegenden Erfindung ist es, ein wasserführendes Haushaltsgerät, insbesondere eine Geschirrspülmaschine oder Waschmaschine, bereitzustellen, bei welchem die Gefahr einer Fehlbedienung und/oder Fehlfunktion verringert ist.

Gemäß der Erfindung wird diese Aufgabe bei einem wasserführenden Haushaltsgerät der eingangs genannten Art dadurch gelöst, dass die Überwachungseinrichtung den maximal möglichen Füllstand des Vorratsbehälters erfasst, wobei die Überwachungseinrichtung zum Erkennen eines Nachfüllvorgangs bei dem wenigstens einen Vorratsbehälter ausgebildet ist, und wobei von der Überwachungseinrichtung in Abhängigkeit vom jeweilig erkannten Nachfüllvorgang eine automatische Durchführung mindestens eines Sonderspülganges zur Beseitigung von überschüssigem Verbrauchsstoff vorgesehen ist.

Dadurch sind Fehlbedienungen und/oder Fehlfunktionen des erfindungsgemäßen, wasserführenden Haushaltsgeräts weitgehend vermieden. Es können zudem verbesserte Reinigungsergebnisse sichergestellt werden.

Zweckmäßigerweise kann die Überwachungseinrichtung mit einer Ausgabeeinrichtung zur Signalisierung des maximal möglichen Füllstands gekoppelt sein. Insbesondere kann die Überwachungseinrichtung zur Ausgabe einer Hinweismeldung durch die Ausgabeeinrichtung bei einem Ansteigen des Füllstands des Zugabemittels im Vorratsbehälter über den vorgesehenen Maximalfüllstand ausgebildet sein. Vorzugsweise kann die Ausgabeeinrichtung eine optische Anzeigeeinrichtung und/oder akustische Wiedergabeeinheit umfassen. Dies verbessert den Bedienkomfort für einen Benutzer, da ihm nun mitgeteilt werden kann, wann er den Befüllungsvorgang stoppen soll, weil der maximale Füllstand des Vorratsbehälters erreicht ist. Dies insbesondere hilfreich bei Vorratsbehältern, die schwer einsehbar eingebaut sind.

Dadurch kann dem Benutzer beim Befüllen des Vorratsbehälters mit Zugabemittel bzw. Verbrauchsstoff in einfacher und zuverlässiger Weise mitgeteilt werden, wann ein Füllzustand erreicht ist, ab dem der Vorratsbehälter bis zum maximal erlaubten Füllstand mit Zugabemittel voll gefüllt ist. Dadurch kann der Benutzer den Befüllungsvorgang rechtzeitig abbrechen, bevor der Vorratsbehälter überfüllt wird und eine unzulässige Überschussmenge an Zugabemittel in den Behandlungsraum des wasserführenden Haushaltsgeräts gelangt. Dadurch kann weitgehend vermieden werden, dass die Waschgänge oder Spülgänge des wasserführenden Haushaltsgeräts nach Start eines Betriebsprogramms durch überschüssiges Zugabemittel negativ beeinträchtigt werden. Insbesondere kann somit eine Überdosierung für einen Spülgang oder Waschgang eines gewählten Betriebsprogramms weitgehend vermieden werden, das nach dem Befüllungsvorgang gestartet wird. Auch ein ungewolltes Ausschütten und/oder Überlaufen an Zugabemittel aus dem Vorratsbehälter und damit etwaig einhergehende Verschmutzungen des Behandlungsraums des Haushaltsgeräts, dessen sonstigen Innen- und/oder Außenteile, und/oder dessen Aufstellort können weitgehend vermieden werden. Indem die Überwachungseinrichtung den maximal möglichen Füllstand des Vorratsbehälters erfasst, kann also auch der Bedienkomfort für den Benutzer verbessert werden.

Die Überwachungseinrichtung ist zum Erkennen eines Nachfüllvorgangs bei dem wenigstens einen Vorratsbehälter ausgebildet, wobei von der Überwachungseinrichtung in Abhängigkeit vom jeweilig erkannten Nachfüllvorgang eine automatische Durchführung mindestens eines Sonderspülganges zur Beseitigung von überschüssigem Verbrauchsstoff vorgesehen ist. Dadurch sind Überdosierungen an Zugabemittel oder Verschmutzungen durch das überschüssige Zugabemittel während des eigentlichen Betriebsgangs eines gewählten Betriebsprogramms in zuverlässiger Weise vermieden.

Dazu kann es zweckmäßig sein, wenn die Überwachungseinrichtung einen Nachfüllvorgang durch eine Auswertung einer Änderung des Füllstandes erkennt. Die Änderung des Füllstands ist in einfacher Weise insbesondere mittels ein oder mehrerer Sensoren detektierbar. Vorzugsweise weist die Überwachungseinrichtung einen Sensor auf, der auf ein Steigen des Füllstandes auf oder über den vorgegebenen Maximalfüllstand anspricht.

Zusätzlich oder unabhängig hiervon kann die Überwachungseinrichtung insbesondere mit einer Ausgabeeinrichtung zur Ausgabe der ermittelten Anzahl verbleibender Spülgänge gekoppelt sein bzw. in Wirkverbindung stehen. Dadurch kann bei einem erfindungsgemäßen wasserführenden Haushaltsgerät, insbesondere einer Geschirrspülmaschine oder Waschmaschine, die Gefahr einer Fehlbedienung wirksam verringert und der Bedienkomfort verbessert werden. Die Ausgabe der konkreten Anzahl verbleibender Spülvorgänge, für welche der Füllstand des Vorratsbehälters noch ausreichend ist, ermöglicht es dem Bediener, zweifelsfrei zu erkennen, ob der jeweiligen Verbrauchsstoff zumindest für den nächsten Spülgang noch ausreichend ist. Die Gefahr eines Einschaltens des wasserführenden Haushaltsgeräts bei einem zu niedrigen Füllstand ist gegenüber einem wasserführenden Haushaltsgeräts entsprechend dem Stand der Technik deutlich verringert. Dabei tritt ein Gewöhnungseffekt nicht ein, da sich die konkret ausgegebene Anzahl von Spülgang zu Spülgang verändert. Dies erweckt die Aufmerksamkeit des Bedieners, so dass die Gefahr des Ignorierens der Ausgabe allenfalls gering ist. Zudem wird der Bediener frühzeitig über die noch möglichen Spülgänge informiert, so dass er rechtzeitig prüfen kann, ob der vorhersehbar nachzufüllende Verbrauchsstoff in seinem Haushalt vorhanden ist, oder ob er diesen erst beschaffen muss. Für Letzteres steht dem Bediener jedoch aufgrund der frühzeitigen Information genügend Zeit zur Verfügung. Spätestens dann, wenn der Wert Null für die Anzahl der verbleibenden Spülvorgänge ausgegeben wird, kann der Bediener den betroffenen Vorratsbehälter dann auffüllen.

Neben der Vermeidung von Bedienungsfehlern bewirkt diese vorteilhafte Ausgestaltung eines wasserführenden Haushaltsgeräts aber auch eine Verbesserung des Bedienkomforts. So können durch die Ausgabe der konkreten Anzahl der verbleibenden Spülgänge die Nachfüllintervalle bei gleichbleibender Vorratsbehältergröße deutlich verlängert werden, da aufgrund der verbesserten Bedienerinformation - ebenso wie ein zu spätes Auffüllen - auch ein zu frühes Auffüllen oder gar Überbefüllen des Vorratsbehälters verhindert werden kann. Zudem ist der Fall ausgeschlossen, dass der Bediener glaubt, die Maschine nicht mehr benutzen zu können, obwohl noch genug Vorratsstoff für den nächsten Spülgang vorhanden ist.

Die Ermittlung der Anzahl verbleibender Spülvorgänge, für welche der Füllstand des wenigstens einen Vorratsbehälters ausreichend ist, kann vorzugsweise anhand eines Algorithmus, der insbesondere wenigstens einen bekannten Füllstand des Verbrauchsstoffes und den zu erwartenden Verbrauch des Verbrauchsstoffes pro Spülgang berücksichtigt.

Gemäß einer vorteilhaften Weiterbildung der Erfindung umfasst die Ausgabeeinrichtung eine optische Anzeigeeinrichtung zur Darstellung der Anzahl von verbleibenden Spülgängen. Die Anzeigeeinrichtung kann beispielsweise eine Lampen- oder Leuchtdiodenanordnung oder eine Flüssigkristallanzeige umfassen. So kann die Anzeigeeinrichtung so ausgebildet sein, dass je verbleibendem Spülvorgang eine Lampe oder Leuchtdiode zum Aufleuchten gebracht ist. Im Falle einer Flüssigkeitskristallanzeige (LCD-Anzeige) kann die Anzahl verbleibender Spülvorgänge beispielsweise durch einen Balken variabler Länge dargestellt sein.

Die Ausgabeeinrichtung kann dabei so ausgebildet sein, dass die Darstellung der Anzahl von verbleibenden Spülgängen bei eingeschaltetem, wasserführendem Haushaltsgerät ständig oder in ausgewählten Zeiträumen erfolgt. So ist es beispielsweise möglich, dass die Darstellung lediglich vom Einschalten des wasserführenden Haushaltsgeräts bis zum Starten eines Spülganges durch den Bediener erfolgt.

Gemäß einer bevorzugten Weiterbildung der Erfindung weist die optische Anzeigeeinrichtung eine numerische Anzeige zur Darstellung der Anzahl von verbleibenden Spülgängen auf. Eine numerische Anzeige ermöglicht allgemein die Darstellung von Zahlen. Das bedeutet vorliegend, dass die Anzahl der verbleibenden Spülvorgänge konkret als Zahl ausgebbar ist. Auf diese Weise kann die Anzahl der verbleibenden Spülvorgänge platzsparend und leicht verständlich dargestellt werden.

Entsprechend einer anderen bevorzugten Weiterbildung der Erfindung weist die optische Anzeigeeinrichtung eine alphanumerische Anzeige zur Darstellung der Anzahl verbleibender Spülvorgänge auf. Eine alphanumerische Anzeige ermöglicht allgemein die Darstellung von Zahlen und Buchstaben. Auf diese Weise ist die Darstellung der Anzahl verbleibender Spülvorgänge als Text- und Zahlenkombination möglich. So ist beispielsweise eine Darstellung der Form "Klarspüler reicht noch für 10 Spülgänge" möglich. Hierdurch wird die Bedienerführung weiter verbessert.

Gemäß einer vorteilhaften Weiterbildung der Erfindung weist die Überwachungseinrichtung einen Sensor auf, der auf ein Absinken des Füllstandes unter einen vorgegebenen Mindestfüllstand anspricht. Ein derartiger Sensor kann so ausgebildet sein, dass er ein binäres Signal erzeugt, wobei ein erster Zustand des binären Signals signalisiert, dass der Füllstand des Vorratsstoffes im jeweiligen Vorratsbehälter auf oder über dem vorgegebenen Mindestfüllstand liegt, wobei der andere, zweite Zustand signalisiert, dass der erfasste Füllstand unter dem vorgegebenen Mindestfüllstand liegt. Ein derartiger Sensor kann beispielsweise einen am Vorratsbehälter befestigten Reed-Schalter umfassen, der mit einem in Abhängigkeit von dem Füllstand beweglichen magnetischen Teil zusammenwirkt. Derartige Sensoren sind vergleichsweise einfach aufgebaut. Gleichwohl erlauben sie eine hinreichend genaue Ermittlung der Anzahl verbleibender Spülgänge.

So kann vorgesehen sein, dass beim Ansprechen des Sensors aus dem dann aktuellen Füllstand, der dem vorgegebenen Mindestfüllstand entspricht, und dem Verbrauch an Vorratsstoff je Spülgang, die Anzahl der noch verbleibenden Spülgänge berechnet wird. Die so berechnete Anzahl wird dann an den Bediener ausgegeben. Wird nun ein weiterer Spülgang durchgeführt, so kann die anhand des Mindestfüllstands berechnete Anzahl einfach um den Wert 1 vermindert werden. Diese Dekrementierung kann für jeden weiteren durchgeführten Spülgang fortgesetzt werden. Auf diese Weise ist bei lediglich einer durchgeführten Messung des Füllstands die Ermittlung der Anzahl verbleibender Spülgänge bei weiter abnehmendem Füllstand möglich. Der Mindestfüllstand ist dabei bevorzugt so vorgegeben, dass bei dessen Erreichen noch 5-15 Spülgänge möglich sind. Auf diese Weise erfolgen bis zum Erreichen des Wertes "Null" für die Anzahl der verbleibenden Spülvorgänge lediglich 5-15 Dekrementierungsschritte, so dass die möglicherweise auftretende Differenz zwischen vorhergesagtem und tatsächlichen Verbrauch an Verbrauchsstoff zu keiner größeren Ungenauigkeit bei der Ermittlung der Anzahl verbleibender Spülgänge führt.

Gemäß einer zweckmäßigen Weiterbildung der Erfindung weist die Überwachungseinrichtung einen Sensor auf, der auf ein Steigen des Füllstandes auf oder über einen vorgegebenen Maximalfüllstand anspricht. Auch dieser Sensor kann so ausgebildet sein, dass er ein binäres Signal abgibt, wobei ein Zustand des Signals signalisiert, dass der Füllstand den vorgegebenen Maximalfüllstand erreicht oder übersteigt, wobei der andere Zustand des Signals bedeutet, dass der Füllstand unter dem vorgegebenen Maximalfüllstand liegt. Auch dieser Sensor kann mit einem feststehenden Reed-Kontakt und einem beweglichen Gegenstück ausgebildet sein. Die Signale eines derartigen Sensors können bei der Ermittlung der Anzahl der verbleibenden Spülgänge verwendet werden. Der Hauptzweck liegt jedoch darin, die Information, ob der Vorratsbehälter vollständig gefüllt ist oder nicht, einem Benutzer der Geschirrspülmaschine zur Verfügung zu stellen, was den Bedienkomfort weiter steigert.

Gemäß einer besonders bevorzugten Weiterbildung der Erfindung weist die Überwachungseinrichtung einen Sensor zum Messen des Füllstands auf. Damit ist eine Messung des Füllstandes möglich, so dass die Anzahl der verbleibenden Spülvorgänge jeweils auf der Basis eines aktuellen Messwertes des Füllstandes erfolgen kann. Auf diese Weise kann die Genauigkeit der Angabe der Anzahl verbleibender Spülvorgänge erhöht werden.

In einer vorteilhaften Weiterbildung der Erfindung ist die Ermittlungseinrichtung zur Berücksichtigung wenigstens eines verbrauchsbeeinflussenden Parameters bei der Ermittlung der Anzahl verbleibender Spülgänge ausgebildet. Auf diese Weise ist es möglich, die Genauigkeit der Ermittlung der Anzahl verbleibender Spülvorgänge zu erhöhen, da der der Ermittlung zugrundeliegende Verbrauch je Spülgang besser mit dem tatsächlichen Verbrauch in Einklang gebracht werden kann. Verbrauchsbeeinflussende Parameter sind insbesondere Einstellwerte, wie beispielsweise Wasserhärte, Spülwassertemperatur, Spülprogramm, usw.

In einer bevorzugten Weiterbildung der Erfindung ist die Überwachungseinrichtung so ausgebildet, dass die Ausgabe der ermittelten Anzahl verbleibender Spülvorgänge nur erfolgt, wenn der Füllstand des wenigstens einen Vorratsbehälters unter einen vorgegebenen Mindestfüllstand oder die Anzahl verbleibender Spülgänge unter eine vorgegebene Mindestanzahl abgesunken ist. Auf diese Weise ist sichergestellt, dass eine Ausgabe nur erfolgt, wenn sie für den Bediener auch relevant ist. Dies verhindert einen Gewöhnungseffekt beim Bediener, der zum Ignorieren der Anzeige führen könnte.

In einer zweckmäßigen Weiterbildung der Erfindung ist die Überwachungseinrichtung zur Ausgabe einer Warnmeldung bei einem Absinken des Füllstandes des wenigstens einen Vorratsbehälters unter einen für einen weiteren Spülgang erforderlichen Füllstand ausgebildet. Auf diese Weise kann ein InBetriebnehmen des wasseführenden Haushaltsgeräts bei einem leeren Vorratsbehälter selbst dann verhindert werden, wenn der Bediener die Ausgabe der Anzahl verbleibender Spülvorgänge ignoriert. Dabei erfolgt die Ausgabe der Warnmeldung vorzugsweise über ein akustisches Ausgabemittel. Eine akustische Ausgabe der Warnmeldung verbessert deren Wahrnehmbarkeit.

In einer anderen zweckmäßigen Weiterbildung der Erfindung ist die Überwachungseinrichtung zur Ausgabe einer Hinweismeldung bei einem Ansteigen des Füllstandes des wenigstens einen Vorratsbehälters auf oder über einen vorgesehenen Maximalfüllstand ausgebildet. Die Ausgabe einer derartigen Hinweismeldung kann verhindern, dass beim Nachfüllen des Verbrauchsstoffes zuviel Verbrauchsstoff in den Vorratsbehälter eingefüllt wird, der dann überläuft und sich unkontrolliert in das wasserführende Haushaltsgerät, insbesondere in den Spülbehälter einer Geschirrspülmaschine oder in die Waschtrommel einer Waschmaschine, verteilt. Auf diese Weise können Schäden am wasserführenden Haushaltsgerät durch übergelaufenen Verbrauchsstoff weitgehend vermieden werden. Dabei ist es zweckmäßig, wenn die Warnmeldung über ein akustisches Ausgabemittel erfolgt. Auf diese Weise ist die Wahrnehmung der Warnmeldung auch dann möglich, wenn der Bediener während des Auffüllens des Vorratsbehälters etwaig vorhandene optische Ausgabemittel nicht in seinem Blickfeld hat.

In einer besonders bevorzugten Weiterbildung der Erfindung ist die Überwachungseinrichtung zum Erkennen eines Nachfüllvorganges bei dem wenigstens einen Vorratsbehälter ausgebildet, wobei in Abhängigkeit davon eine automatische Durchführung eines Sonderspülganges zur Beseitigung von überschüssigem Verbrauchsstoff vorgesehen ist. Erfahrungsgemäß wird beim Nachfüllen eines Vorratsbehälters häufig eine nicht unerhebliche Menge an Verbrauchsstoff verschüttet. Zudem wird häufig zu viel Vorratsstoff in den Vorratsbehälter eingefüllt, so dass er überläuft. Dieser überschüssige Verbrauchsstoff gelangt unkontrolliert in das Innere des wasserführenden Haushaltsgeräts, insbesondere der Geschirrspülmaschine oder Waschmaschine. Hierdurch kann es einerseits zu Schäden am wasserführenden Haushaltsgerät und andererseits zu mangelhaften Spülergebnissen im nächsten Spülgang oder weiteren nachfolgenden Spülgängen kommen. Diese negativen Folgen können jedoch durch mindestens einen Sonderspülgang zur Beseitigung des überflüssigen Verbrauchsstoffes beseitigt werden.

Der Sonderspülgang kann separat und sofort durchgeführt werden oder in Verbindung mit einem nachfolgenden Spülgang zum Reinigen von Geschirr. Das Erkennen eines durchgeführten Nachfüllvorgangs kann beispielsweise mittels eines Sensors erfolgen, der auf ein Öffnen bzw. Schließen einer Nachfüllöffnung anspricht. Vorzugsweise erfolgt das Erkennen eines durchgeführten Nachfüllvorganges jedoch durch eine Auswertung einer Änderung des Füllstandes des Vorratsbehälters. In diesem Fall kann auf einen oder mehrere bereits vorhandene Füllstandssensoren zurückgegriffen werden.

Sonstige Weiterbildungen der Erfindung sind in den Unteransprüchen wiedergegeben,

Die Erfindung und ihre Weiterbildungen werden nachfolgend anhand von Zeichnungen näher erläutert. Es zeigen:
- **Figur 1**: eine schematische Darstellung eines vorteilhaften Ausführungsbeispiels einer erfindungsgemäßen Geschirrspülmaschine in Schrägansicht, und
- **Figur 2**: einen schematisierten Funktionsplan der Geschirrspülmaschine von Figur 1.

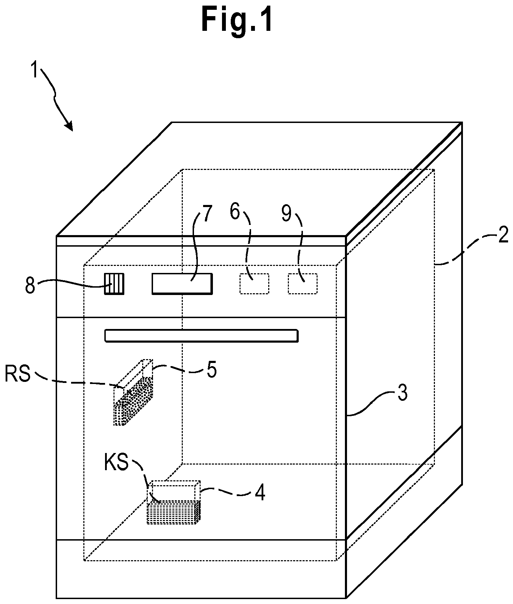

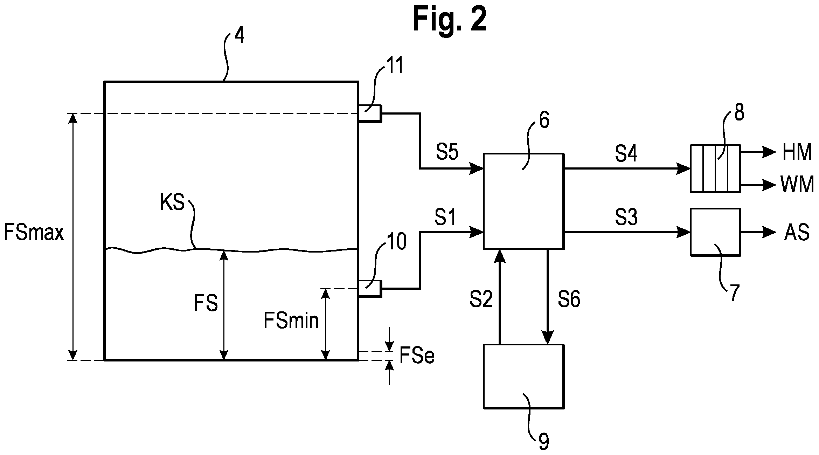

Elemente mit gleicher Funktion und Wirkungsweise sind in den Figuren 1 und 2 jeweils mit denselben Bezugszeichen versehen.

Figur 1 zeigt eine Geschirrspülmaschine 1 als vorteilhaftes Ausführungsbeispiel eines erfindungsgemäßen wasserführenden Haushaltsgeräts in einer schematischen Schrägansicht. Dabei sind nur die für das Verständnis der Erfindung wesentlichen Teile dargestellt. Die Geschirrspülmaschine 1 weist einen schematisch dargestellten Spülbehälter 2 zum Spülen von Geschirr auf. Der Spülbehälter 2 ist durch eine Tür 3 verschlossen, welche zum Beschicken des Spülbehälters 2 mit Geschirr geöffnet werden kann. An der Innenseite der Tür 3 ist ein Klarspülerbehälter 4 zum Bevorraten von Klarspüler KS angeordnet. Dabei fasst der Klarspülerbehälter 4 eine derartige Menge von Klarspüler KS, dass der Klarspüler KS für mehrere Spülgänge, beispielsweise für 50 Spülgänge, ausreicht.

Weiterhin weist die Geschirrspülmaschine 1 einen Regeneriersalzbehälter 5 zum Bevorraten von Regeneriersalz RS auf. Der Regeneriersalzbehälter 5 ist hier im Ausführungsbeisspiel auf der Innenseite einer Seitenwand des Spülbehälters 2 angeordnet. In der Praxis kann er insbesondere in einer Bodenbausgruppe unterhalb des Bodenelements des Spülbehälters 2 untergebracht sein. Das Fassungsvermögen des Regeneriersalzbehälters 5 ist ebenfalls für eine Vielzahl von Spülgängeg ausgelegt.

Bei geöffneter Tür 3 sind der Klarspülbehälter 4 und der Regeneriersalzbehälter 5 zugänglich, so dass sie durch einen Bediener aufgefüllt werden können.

Die Geschirrspülmaschine 1 weist eine Überwachungseinrichtung 6 für den Füllstand des Klarspülerbehälters 4 und für den Füllstand des Regeneriersalzbehälters 5 auf. Diese Überwachungseinrichtung 6 umfasst eine Ermittlungseinheit, welche zur Ermittlung einer Anzahl verbleibender Spülgänge, für welche der Füllstand des Klarspülerbehälters und der Füllstand des Regeneriersalzbehälters ausreichend sind. Die ermittelte Anzahl AS verbleibender Spülgänge wird über eine Ausgabeeinrichtung 7, ausgegeben. Die Ausgabeeinrichtung ist als optische Anzeigeeinrichtung ausgebildet und weist eine alphanumerische Anzeige 7 auf, so dass Klartextmeldungen z.B. der Form "Klarspüler reicht noch für 10 Spülgänge" anzeigbar sind. Die optische Anzeigeeinrichtung 7 ist an der Außenseite der Tür 3 in einem oberen Bereich angeordnet, so dass die ausgegebenen Meldungen gut sichtbar sind. Dabei kann der Bediener den Füllstand der Vorratsbehälter 4, 5 auch bei geschlossener Tür 3 überwachen.

Die Geschirrspülmaschine 1 weist weiterhin ein akustisches Ausgabemittel 8 auf, welches beispielsweise als Summer 8 ausgebildet ist. Auch der Summer 8 ist an der Außenseite der Tür 3 angeordnet.

Die Überwachungseinrichtung 6 hingegen ist geschützt im Inneren der Tür 3 oder in der Bodenbaugruppe der Geschirrspülmaschine unterhalb deren Spülbehälter angeordnet. Dort ist weiterhin eine Steuereinrichtung 9 zum Steuern der Geschirrspülmaschine 1 vorgesehen. Während im Ausführungsbeispiel der Figur 1 die Überwachungseinrichtung 6 und die Steuereinrichtung 9 getrennt sind, könnte die Überwachungseinrichtung 6 auch in die Steuereinrichtung 9 integriert sein.

Figur 2 zeigt die Funktionsweise der Überwachungseinrichtung der Geschirrspülmaschine 1 am Beispiel der Überwachung des Füllstandes FS des Klarspülerbehälters 4. Die Überwachung des Füllstandes des Regeneriersalzbehälters 5 erfolgt in analoger Weise. Die Überwachungseinrichtung kann auch zur Überwachung der Füllstände anderer Vorratsbehälter ausgebildet sein. So könnte beispielsweise ein Vorratsbehälter für Glasschutzmittel, für Deodorantien, für Glasschutzmittel oder für Reinigungsverstärker überwacht werden.

In Figur 2 ist der Klarspülbehälter 4 teilweise mit Klarspüler KS gefüllt. Der aktuelle Füllstand FS ist durch einen Doppelpfeil dargestellt. Ausgehend von der dargestellten Situation sinkt der Füllstand FS bei jedem durchgeführten Spülgang um einen bestimmten Wert. Wenn der Füllstand FS auf oder unter einen vorgegebenen Mindestfüllstand FSmin absinkt, wird dies durch einen Sensor 10 erkannt. Dieser Sensor 10 ist zur Abgabe eines Signals S1 an die Überwachungseinrichtung 6 ausgebildet. Bei dem Signal S1 handelt es sich um ein binäres Signal, wobei das Absinken des Füllstandes FS auf oder unter den vorgegebenen Mindestfüllstand FSmin zu einem Zustandswechsel des Signals S1 führt. Der Zustandswechsel des Signals S1 zeigt der Überwachungseinrichtung 6 folglich an, dass der Füllstand FS den Mindestfüllstand FSmin gerade erreicht oder unterschreitet. Auf diese Weise ist der aktuelle Füllstand FS hinreichend genau bestimmt, um aus einem zu erwartenden Verbrauch je Spülgang die Anzahl AS der verbleibenden Spülgänge zu ermitteln, für welche der Füllstand FS des Klarspülerbehälters 4 noch ausreichend ist.

Um den Verbrauch je Spülgang möglichst genau abschätzen zu können, werden mittels eines Signals S2 verbrauchsbestimmende Parameter von der Steuereinrichtung 9 zur Überwachungseinrichtung 6 übertragen. Bei den verbrauchsbestimmenden Parametern kann es sich um langfristig gleichbleibende Parameter, wie beispielsweise die Härte des zur Verfügung stehenden Wassers, handeln. Berücksichtigt werden können jedoch auch kurzfristige, veränderliche Parameter, wie beispielsweise die Spülwassertemperatur. Es könnte auch eine langfristige Analyse des Nutzerverhaltens durchgeführt werden, so dass mit guter Wahrscheinlichkeit vorhergesagt werden kann, welche Spülwassertemperatur der Nutzer bei zukünftigen Spülgängen vorwählen wird. Analoges gilt betreffend der Wahl eines bestimmten Spülprogramms.

Unter Berücksichtigung der Informationen der Signale S1 und S2 ermittelt die Ermittlungseinrichtung 6 die Anzahl AS der möglichen Spülvorgänge, für welche die Menge an Klarspüler KS im Klarspülerbehälter 4 noch ausreichend ist. Ein mit der Anzahl AS verbleibender Spülgänge korrespondierendes Signal S3 wird der Anzeigeeinrichtung 7 zugeführt, welche daraufhin die Anzahl AS verbleibender Spülvorgänge ausgibt. Bei erneuter Durchführung eines Spülvorganges wird von der Steuereinrichtung 9 mittels des Signals S2 eine entsprechende Information an die Überwachungseinrichtung 6 übermittelt. Daraufhin vermindert die Überwachungseinrichtung 6 die zuvor ermittelte Anzahl AS verbleibender Spülvorgänge um den Wert 1. Diese Anzahl wird nach einer entsprechenden Veränderung des Signals S2 an der Anzeigeeinrichtung 7 dargestellt. Durch diese Vorgehensweise ist es möglich, die Anzahl AS verbleibender Spülvorgänge ohne weitere unmittelbare Erfassung oder Messung des Füllstandes FS im Klarspülbehälter 4 mit hinreichender Genauigkeit zu bestimmen.

Wenn der durch die Überwachungseinrichtung 6 durchgeführte Algorithmus ergibt, dass der Füllstand FS unter einem Füllstand FSe liegt, der zur Durchführung eines weiteren Spülganges erforderlich ist, wird durch die Anzeigeeinrichtung 7 für die Anzahl AS verbleibender Spülvorgänge der Wert "Null" ausgegeben. Zusätzlich veranlasst die Überwachungseinrichtung 6 durch ein entsprechendes Signal S4 das akustische Ausgabemittel 8 zur Ausgabe einer Warnmeldung WM. Hierdurch wird der Bediener mit Nachdruck darauf hingewiesen, dass der Klarspülerbehälter 4 leer oder wenigstens nahezu leer ist, so dass der nächste Spülgang nicht mehr ordnungsgemäß durchgeführt werden kann.

Wenn der Bediener nun wie vorgesehen Klarspüler KS nachfüllt, steigt der Füllstand FS des Klarspülbehälters 4 an. Wenn ein vorgesehener maximaler Füllstand FSmax erreicht ist, so wird dies mittels eines weiteren Sensors 11 detektiert.

Dieser Sensor 11 gibt ein binäres Signale S5 an die Überwachungseinrichtung 6 ab. Wenn das Signal S5 einen Zustand annimmt, der ein Erreichen des maximalen Füllstands FSmax signalisiert, so wird das akustische Ausgabemittel 8 durch die Überwachungseinrichtung 6 mittels des Signals S4 veranlasst, eine Hinweismeldung HM auszugeben. Auf diese Weise wird dem Bediener angezeigt, den Nachfüllvorgang zu beenden. Dadurch wird verhindert, dass der Bediener zuviel Klarspüler KS einfüllt, der dann überläuft und in den Innenraum des Spülbehälters gelangt. Hierdurch kann eine Überdosierung von Klarspüler KS in einem folgenden Spülgang verhindert werden. Auf diese Weise wird das Ergebnis des folgenden Spülganges verbessert, gleichzeitig werden Schäden durch Überdosierung an der Geschirrspülmaschine verhindert.

Die Überwachungseinrichtung 6 ist darüber hinaus zum Erkennen, dass ein Nachfüllvorgang durchgeführt wurde, ausgebildet. Sofern eine Zustandsänderung eines der Signale S1 und/oder S5 eine Erhöhung des Füllstandes FS signalisiert, wird diese Information mittels eines Signals S6 zur Steuereinrichtung 9 übertragen. Diese veranlasst dann die Durchführung eines Sonderspülprogramms, welches dazu dient, unkontrolliert in den Spülbehälter 2 gelangten Klarspüler KS zu entfernen. Auf diese Weise wird dem Umstand Rechnung getragen, dass erfahrungsgemäß bei jedem Nachfüllvorgang zumindest einige Tropfen an Klarspüler KS verschüttet werden. Dieser überschüssige Klarspüler KS wird dann mittels des Sonderspülprogramms beseitigt. Das Sonderspülprogramm kann entweder separat oder verbunden mit dem nächsten oder mindestens einem weiteren nachfolgenden, durch den Bediener initiierten Spülgang durchgeführt werden. Auf diese Weise kann das Spülergebnis des nächsten Spülganges verbessert und ein Schaden an der Geschirrspülmaschine verhindert werden.

Die Sensoren 10 und 11 des dargestellten und erläuterten Ausführungsbeispiels könnten ggf. durch einen einzigen Sensor ersetzt werden, der im Bereich vom mindestens erforderlichen Füllstand FSe bis zum maximal vorgesehenen Füllstand FSmax ein mit dem jeweiligen Füllstand FS zuordenbares Signal abgibt. Insbesondere könnte der Sensor so ausgebildet sein, dass im angegebenen Bereich das abgegebene Signal zum Füllstand proportional ist.

Verallgemeinernd betrachtet kann es insbesondere zweckmäßig sein, ein wasserführendes Haushaltsgerät mit einem Vorratsbehälter für einen Verbrauchsstoff bzw. ein Zugabemittel und mit einer Signalvorrichtung bereitzustellen, die die mögliche Anzahl von verbleibenden Spülgängen bis zu einem erforderlichen Nachfüllen des Verbrauchs- bzw. Zugabemittels anzeigt. Dazu ist mindestens ein Sensor vorgesehen, der insbesondere derart ausgebildet ist, dass er den jeweils aktuellen Füllstand des Verbrauchsmittels in dem Vorratsbehälter dynamisch erfassen kann. Dieser gemessene Füllstand korreliert mit einer bestimmten Füllmenge an Verbrauchsmittel im Vorratsbehälter. Die Steuereinrichtung des wasserführenden Haushaltsgeräts ordnet dem jeweilig ermittelten Füllstand z.B. aufgrund von abgespeicherten Tabellen oder sonstigen mathematischen Verknüpfungen dann die verbleibende Anzahl von restlichen Spülgängen zu, die mit diesem derzeitigen Füllstand noch möglich sind.

Beispielsweise kann die Steuereinrichtung dazu die Differenz zwischen dem ursprünglichen, maximalen Füllstand des Verbrauchsmittels im Vorratsbehälter und dem aktuellen, gemessenen Füllstand bilden, sowie diese Differenz durch die Anzahl der ausgehend vom maximalen Füllstand bereits abgearbeiteten bzw. bisher durchgeführten Spülgänge dividieren, so dass sich eine mittlere Verbrauchsmenge pro Spülgang ermitteln lässt. Aus der Division der aktuellen Füllstandsmenge durch diese mittlere Verbrauchsmenge lässt sich dann schließlich die mit Hilfe dieser Verbrauchsmittel- Restmenge voraussichtliche Anzahl von noch durchführbaren Spülgängen bestimmen.

Alternativ dazu kann es ggf. vorteilhaft sein, einen ersten Sensor wie z.B. 11 (siehe Figur 2) zum Erfassen lediglich einer ersten vorgegebenen Füllhöhe des Vorratsbehälters, wenn diese vom Verbrauchs- bzw. Zugabemittel erreicht ist und die dann einem maximalen Füllstand FSmax an Verbrauchsmittel im Vorratsbehälter entspricht, und einen zweiten Sensor wie z.B. 10 zum Erfassen lediglich einer zweiten vorgegebenen Füllhöhe des Vorratsbehälters, wenn diese vom Zugabemittel erreicht ist und die dann einem unterem Füllstand, insbesondere Mindestfüllstand FSmin an Verbrauchsmittel entspricht, bei dem noch ein oder mehrere Spülgänge möglich sind, vorzusehen. Im Ausführungsbeispiel von Figur 2 ist z.B. der erste Sensor 11 höher als der zweite Sensor 10 (in Höhenerstreckung des Vorratsbehälters 4 betrachtet) positioniert. Beide Sensoren 10, 11 sind also jeweils genau einem Füllstand spezifisch zugeordnet. Wenn der zweite Sensor detektiert, dass das Verbrauchsmittel im Vorratsbehälter bis auf den unteren Füllstand, insbesondere Mindestfüllstand abgesunken ist, übermittelt er ein Detektionssignal wie z.B. S1 an die Überwachungseinrichtung wie z.B. 6. Diese Steuereinrichtung teilt dem jeweiligen Benutzer mittels einer entsprechenden akustischen, optischen, haptischen und/oder sonstigen Signalvorrichtung auf direktem oder indirektem Weg die Anzahl der Spülgänge mit, die mit der Restmenge an Verbrauchsmittel noch möglich sind, bis der Vorratsbehälter leer wird. In einer einfachen Ausführungsvariante kann es ausreichend sein, wenn lediglich der untere, zweite Sensor vorgesehen ist, der durch ein entsprechendes Signal der Überwachungseinrichtung indiziert, wenn die Füllmenge an Zugabemittel bzw. Verbrauchsmittel auf diese Marke abgesunken ist. Insbesondere kann es zweckmäßig sein, dieser Füllmarke eine bestimmte Anzahl von - wie z.B. 3 - Spülgängen fix zuzuordnen, die dann noch mit der Restmenge an Verbrauchsmittel aus dem Vorratsbehälter sichergestellt sind. Der obere Sensor wie z.B. 11 kann dabei entfallen.

Zusätzlich oder unabhängig davon, dass von mindestens einem Sensor erkannt wird, ob das Zugabemittel im Vorratsbehälter auf den unteren Füllstand abgesunken ist, ab dem noch ein oder mehrere Spülgänge mit der verbliebenen Restmenge an Zugabemittel möglich sind, ist es zweckmäßig, mittels mindestens eines Sensors wie z.B. 11 diejenige Füllstandsmarke wie z.B. FSmax zu detektieren, ab der der Vorratsbehälter wie z.B. 4 maximal mit Zugabemittel befüllt ist. Wird dieser Füllstand vom Sensor detektiert, so übermittelt er ein entsprechendes Detektionssignal wie z.B. S5 an die Überwachungseinrichtung bzw. Steuereinrichtung wie z.B. 6 des wasserführenden Haushaltsgeräts. Die Steuereinrichtung signalisiert dem Benutzer den erreichten maximalen Füllstand über ein oder mehrere Ausgabemittel wie z.B. 7, insbesondere ein oder mehrere optische und/oder akustische Signaleinrichtungen. Dadurch ist die Benutzerführung verbessert, da der Benutzer durch die Signalisierung jetzt informiert wird, wann er den Befüllungsvorgang abbrechen bzw. beenden soll. Dies ist insbesondere bei schwer einsehbaren Vorratsbehältern vorteilhaft. Z.B. kann oftmals der Salzbehälter einer Geschirrspülmaschine, dessen Zugang sich üblicherweise im Boden deren Spülbehälters befindet, von außen bei geöffneter Tür des Spülbehälters vom jeweiligen Benutzer beim Nachfüllen von Salz nur schwer eingesehen werden. Selbstverständlich kann der Sensor sein Detektionssignal auch direkt an eine Signaleinrichtung übermitteln, die dann ein oder mehrere entsprechende Informationen, insbesondere mittels ein oder mehrerer optischer und/oder akustischer Signale, an eine Bedienperson ausgibt. Da mit einem Auffüllen des Vorratsbehälters bis zu dessen maximalem Füllstand in der Praxis oftmals eine Überbefüllung mit Zugabemittel oder Verschütten von Zugabemittel einhergeht, durch die oder das in unkontrollierter Weise Zugabemittel in den Behandlungsraum des jeweiligen wasserführenden Haushaltsgeräts, wie z. B. in den Spülbehälter einer Geschirrspülmaschine, gelangt, kann die Überwachungseinrichtung bzw. Steuereinrichtung zweckmäßigerweise derart ausgebildet sein, dass sie nach dem Erfassen des maximalen Füllstands durch den Sensor vor dem Start eines nachfolgend ausgewählten Betriebsprogramms wie z.B. Geschirrspülprogramms oder Waschprogramms mindestens ein Sonderprogramm initiiert. Dieses kann insbesondere zur Reinigung des Behandlungsraums dienen, um überschüssiges oder verschüttetes Zugabemittel vor Beginn des eigentlichen Betriebsprogramms aus dem Behandlungsraum zu entfernen. Mit Start des Sonderprogramms wird also zweckmäßigerweise Reinigungsflüssigkeit dem Behandlungsraum des wasserführenden Haushaltsgeräts zugeführt. Ggf. kann dem ausgewählten Betriebsprogramm eigens ein extra Vorspülprogramm vorgeschaltet sein, durch das Reinigungsflüssigkeit, insbesondere Wasser in den Behandlungsraum zum Ausspülen von überschüssigem oder verschüttetem Zugabemittel aus dem Behandlungsraum einläuft und mittels einer Pumpe aus dem Behandlungsraum abgepumpt wird. Dieses Sonderprogramm kann durch die Steuereinrichtung insbesondere automatisch zum Ablauf gebracht werden. Selbstverständlich kann dem Benutzer durch die Signalisierungseinrichtung ggf. auch angezeigt oder mitgeteilt werden, dass das überschüssige Zugabemittel von ihm zweckmäßigerweise mechanisch z.B. mittels eines Handbesens zu entfernen ist.

Insbesondere kann die Signaleinrichtung als Lautsprecher ausgebildet sein, dass das Erreichen des maximalen Füllstandes des Vorratsbehälters akustisch ausgibt. Zusätzlich oder unabhängig hiervon kann als Signaleinrichtung ggf. eine Anzeigevorrichtung vorgesehen sein, die ein Display oder mindestens eine LED oder eine sonstiges optische Anzeigemittel umfasst. Die jeweilige Signalvorrichtung kann insbesondere in und/oder an einer beim Befüllen vom Benutzer einsehbaren Fläche des wasserführenden Haushaltsgeräts vorgesehen sein. Im Fall einer Geschirrspülmaschine kann z.B. eine Anzeigevorrichtung auf und/oder in der Innentür oder an einer Bedienblende der Tür derart vorgesehen sein, dass sie bei geöffneter Tür beim jeweiligen Befüllvorgang des jeweiligen Vorratsbehälters sichtbar ist.

### Bezugszeichenliste

- 1: Geschirrspülmaschine
- 2: Spülbehälter
- 3: Tür
- 4: Klarspülerbehälter
- 5: Regeneriersalzbehälter
- 6: Ermittlungseinrichtung
- 7: Ausgabeeinrichtung
- 8: akustisches Ausgabemittel
- 9: Steuerung
- 10: Sensor für Mindestfüllstand
- 11: Sensor für Maximalfüllstand

- AS: Anzahlverbleibender Spülvorgänge
- FS: Füllstand
- FSe: erforderlicher Füllstand
- FSmax: Maximalfüllstand
- FSmin: Mindestfüllstand
- HM: Hinweismeldung
- KS: Klarspüler
- RS: Regeneriersalz
- S1: Sensorsignal
- S2: Steuersignal für Ausgabeeinrichtung
- S3: Signal
- S4: Steuersignal für akustisches Ausgabemittel
- S5: Sensorsignal
- S6: Signal
- WM: Warnmeldung

## Patentansprüche

1. Wasserführendes Haushaltsgerät (1), insbesondere eine Geschirrspülmaschine oder Waschmaschine, mit mindestens einem Vorratsbehälter (4, 5) zum Bevorraten eines Zugabemittels (KS, RS) für mehrere Spülgänge und mit einer Überwachungseinrichtung (6) zum Erfassen des Füllstands (FS) des Zugabemittels (KS, RS), wobei die Überwachungseinrichtung (6) den maximal möglichen Füllstand (FSmax) des Vorratsbehälters (4, 5) erfasst, **dadurch gekennzeichnet, dass** die Überwachungseinrichtung (6) zum Erkennen eines Nachfüllvorgangs bei dem wenigstens einen Vorratsbehälter (4, 5) ausgebildet ist, und dass von der Überwachungseinrichtung (6) in Abhängigkeit vom jeweilig erkannten Nachfüllvorgang eine automatische Durchführung mindestens eines Sonderspülganges zur Beseitigung von überschüssigem Verbrauchsstoff vorgesehen ist.

2. Wasserführendes Haushaltsgerät nach Anspruch 1, **dadurch gekennzeichnet, dass** die Überwachungseinrichtung (6) mit einer Ausgabeeinrichtung (7) zur Signalisierung des maximal möglichen Füllstands (FSmax) gekoppelt ist.

3. Wasserführendes Haushaltsgerät nach Anspruch 2, **dadurch gekennzeichnet, dass** die Überwachungseinrichtung (6) zur Ausgabe einer Hinweismeldung (HM) durch die Ausgabeeinrichtung (7) bei einem Ansteigen des Füllstands (FS) des Zugabemittels (KS, RS) im Vorratsbehälter (4, 5) über den vorgesehenen Maximalfüllstand (FSmax) ausgebildet ist.

4. Wasserführendes Haushaltsgerät nach einem oder mehreren der vorstehenden Ansprüche, **dadurch gekennzeichnet, dass** die Überwachungseinrichtung (6) einen Nachfüllvorgang durch eine Auswertung einer Änderung des Füllstandes (FS) erkennt.

5. Wasserführendes Haushaltsgerät nach einem der Ansprüche 2 bis 4, **dadurch gekennzeichnet, dass** die Ausgabeeinrichtung (7) eine optische Anzeigeeinrichtung und/oder akustische Wiedergabeeinheit umfasst.

6. Wasserführendes Haushaltsgerät nach einem oder mehreren der vorstehenden Ansprüche, **dadurch gekennzeichnet, dass** die Überwachungseinrichtung (6) einen Sensor (11) aufweist, der auf ein Steigen des Füllstandes (FS) auf oder über den vorgegebenen Maximalfüllstand (FSmax) anspricht.

## Claims

1. Water-conducting domestic appliance (1), in particular a dishwasher or washing machine, having at least one reservoir (4, 5) for storing an additive (KS, RS) for several rinses and having a monitoring device (6) for detecting the level (FS) of the additive (KS, RS), wherein the monitoring device (6) detects the maximum possible level (FSmax) of the reservoir (4, 5), **characterised in that** the monitoring device (6) is designed to detect a refilling operation in the at least one reservoir (4, 5), and that at least one special rinse is performed by the monitoring device (6) as a function of the respectively detected refilling operation for removal of excess consumables.

2. Water-conducting domestic appliance according to claim 1, **characterised in that** the monitoring device (6) is coupled to an output device (7) for signalling the maximum possible level (FSmax).

3. Water-conducting domestic appliance according to claim 2,**characterised in that** the monitoring device (6) is designed for the output of a message (HM) by the output device (7) when the level (FS) of the additive (KS, RS) in the reservoir (4, 5) rises above the envisaged maximum level (FSmax).

4. Water-conducting domestic appliance according to one or more of the preceding claims, **characterised in that** the monitoring device (6) detects a refilling operation by evaluating a change in the level (FS).

5. Water-conducting domestic appliance according to one of claims 2 to 4, **characterised in that** the output device (7) comprises an optical display device and/or acoustic reproduction unit.

6. Water-conducting domestic appliance according to one or more of the preceding claims, **characterised in that** the monitoring device (6) has a sensor (11) which responds to a rise in the level (FS) to or above the predetermined maximum level (FSmax).

## Revendications

1. Appareil électroménager à circulation d'eau (1), en particulier un lave-vaisselle ou un lave-linge, avec au moins un récipient de stockage (4, 5) destiné au stockage d'un additif (KS, RS) pour plusieurs cycles de lavage et avec un dispositif de surveillance (6) destiné à la détection de l'état de remplissage (FS) de l'additif (KS, RS), dans lequel le dispositif de surveillance (6) détecte l'état de remplissage possible maximal (FSmax) du récipient de stockage (4, 5), **caractérisé en ce que** le dispositif de surveillance (6) est réalisé pour la reconnaissance d'un processus de remplissage dans l'au moins un récipient de stockage (4, 5) et **en ce que**, en fonction du processus de remplissage reconnu respectivement, une réalisation automatique d'au moins un cycle de lavage particulier destiné à l'élimination de l'excédent de matière consommable est prévue par le dispositif de surveillance (6).

2. Appareil électroménager à circulation d'eau selon la revendication 1, **caractérisé en ce que** le dispositif de surveillance (6) est couplé avec un dispositif de sortie (7) pour la signalisation de l'état de remplissage possible maximal (FSmax).

3. Appareil électroménager à circulation d'eau selon la revendication 2, **caractérisé en ce que** le dispositif de surveillance (6) est réalisé pour la sortie d'un message de notification (HM) par le biais du dispositif de sortie (7) lors d'une progression de l'état de remplissage (FS) de l'additif (KS, RS) dans le réservoir de stockage (4, 5) au-dessus de l'état de remplissage maximal (FSmax) prévu.

4. Appareil électroménager à circulation d'eau selon l'une ou plusieurs des revendications précédentes, **caractérisé en ce que** le dispositif de surveillance (6) reconnaît un processus de remplissage par le biais d'une évaluation d'une modification de l'état de remplissage (FS).

5. Appareil électroménager à circulation d'eau selon l'une des revendications 2 à 4, **caractérisé en ce que** le dispositif de sortie (7) comprend un dispositif d'affichage optique et/ou une unité de restitution acoustique.

6. Appareil électroménager à circulation d'eau selon l'une ou plusieurs des revendications précédentes, **caractérisé en ce que** le dispositif de surveillance (6) présente un capteur (11) qui réagit à une progression de l'état de remplissage (FS) jusqu'à ou au-delà de l'état de remplissage maximal (FSmax) prédéfini.
